(19) Europäisches Patentamt
European Patent Office
Office européen des brevets

(11) EP 2 824 145 B1

(12) **EUROPEAN PATENT SPECIFICATION**

(45) Date of publication and mention of the grant of the patent:
**29.08.2018 Bulletin 2018/35**

(21) Application number: **13758503.0**

(22) Date of filing: **07.03.2013**

(51) Int Cl.:
***C08L 67/02** (2006.01)* ***B65D 1/00** (2006.01)*
***C08F 212/06** (2006.01)* ***C08F 220/32** (2006.01)*
***C08L 25/14** (2006.01)* ***C08L 77/06** (2006.01)*

(86) International application number:
**PCT/JP2013/056230**

(87) International publication number:
**WO 2013/133352 (12.09.2013 Gazette 2013/37)**

(54) **POLYESTER-BASED RESIN COMPOSITION, METHOD FOR PRODUCING SAME, AND MOLDING USING RESIN COMPOSITION**

HARZZUSAMMENSETZUNG AUF POLYESTER-BASIS, VERFAHREN ZUR HERSTELLUNG DERSELBEN UND FORMTEIL, DAS DIE HARZZUSAMMENSETZUNG VERWENDET

COMPOSITION DE RÉSINE À BASE DE POLYESTER, SON PROCÉDÉ DE PRÉPARATION ET PRODUIT MOULÉ UTILISANT LA COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2012 JP 2012053778**

(43) Date of publication of application:
**14.01.2015 Bulletin 2015/03**

(73) Proprietor: **Mitsubishi Gas Chemical Company, Inc.**
**Tokyo 100-8324 (JP)**

(72) Inventors:
- **MIYABE, Takanori**
**Hiratsuka-shi**
**Kanagawa 254-0016 (JP)**
- **KATO, Tomonori**
**Hiratsuka-shi**
**Kanagawa 254-0016 (JP)**
- **MITADERA, Jun**
**Hiratsuka-shi**
**Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**JP-A- H 055 058** **JP-A- H 055 058**
**JP-A- H 093 308** **JP-A- H04 239 056**
**JP-A- H05 214 223** **JP-A- H05 214 244**
**JP-A- S62 187 761** **JP-A- 2002 128 999**
**JP-A- 2002 161 199** **JP-A- 2006 206 921**
**JP-A- 2010 235 804** **JP-A- 2011 037 989**
**JP-A- 2011 037 989** **JP-A- 2011 132 394**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 824 145 B1

**Description**

TECHNICAL FIELD

The present invention relates to a polyester-based resin composition and a molded product using the resin composition. More particularly, the invention relates to a resin composition containing a specific polyester resin serving as a main component and a specific polyamide resin, and to a molded product using the resin composition.

BACKGROUND ART

Polyesters such as polyethylene terephthalate (PET), formed from an aromatic dicarboxylic acid compound and an aliphatic diol compound in the form of monomers, are excellent in transparency, mechanical properties, melt stability, flavor retention, recyclability, etc. Thus, currently, polyesters are widely used as packaging materials such as films, sheets, and hollow containers. However, since the gas barrier property of polyesters to oxygen, carbonate gas, and other gases is not satisfactory, use of polyesters as packaging materials is limited.

There have been employed some methods for improving the gas barrier property of polyester. One method is coating a molded product and a package container made of polyester with aluminum oxide or silicon oxide through vapor deposition. Another method is coating a molded product and a package container made of polyester with a resin having a gas barrier property higher than that of polyester. However, such coating methods have problems, such as addition of a cumbersome step to production of target polyester articles, and impairment in recyclability and mechanical properties of polyester products. Thus, limitation is imposed on carrying out such methods.

One method for easily improving the gas barrier property while solving the aforementioned problems is melt-mixing of a polyester resin with a thermoplastic resin having high gas barrier property. An example of the resin having such a high gas barrier property is an ethylene-vinyl alcohol copolymer resin. The ethylene-vinyl alcohol copolymer resin has poor compatibility with polyester, due to a characteristic intrinsic to the molecular structure thereof. When the two resins are mixed together, the formed resin composition assumes a turbid state, impairing transparency, which is a merit of polyester. When an ethylene-vinyl alcohol copolymer resin is processed at a temperature suitable for processing polyethylene terephthalate, which is one of the most generally used polyesters, the ethylene-vinyl alcohol copolymer resin rapidly deteriorates. In some cases, gelation and scorching occur, and the formed undesired matter is incorporated into a final product, possibly impairing appearance and yield of the products. In addition, in order to remove the undesired matter from a production machine, disassembly and cleaning of the machine must be frequently carried out. Thus, difficulty is encountered in carrying out, on an industrial scale, the technique using ethylene-vinyl alcohol copolymer resin.

Examples of the gas barrier resin other than the ethylene-vinyl alcohol copolymer include polyamides, typically nylon 6 and nylon 66. Among such polyamides, polymetaxylyleneadipamide (MXD6), which is formed through polymerization of a diamine component mainly including m-xylylenediamine and a dicarboxylic acid component mainly including adipic acid, exhibits remarkably high gas barrier property and has a glass transition temperature, a melting point, and a crystallinity which are almost equivalent to those of polyethylene terephthalate, which is one of the most generally used polyesters. Thus, processability of polyester is not impaired. From this viewpoint, polymetaxylyleneadipamide is a resin particularly suitable for improving gas barrier property of polyester.

Since a mixture of PET and MXD6 can be processed under almost the same molding conditions as employed for molding polyethylene terephthalate, the mixture is applied to various packaging materials such as film and bottles (see, for example, Patent Documents 1 to 6).

However, a conventional molded product formed from a blend of PET with MXD6 exhibits relatively high transparency in an unstretched state, but in a stretched state, haze (value) increases and transparency decreases. Patent Document 7 discloses films or sheet having excellent transparency (see abstract). The examples 1-6 describe compositions comprising PBT as a polyester resin, nylon 6 as a polyamide and a styrene-glycidyl methacrylate copolymer as an epoxy-functional polymer.

CITATION LIST

PATENT DOCUMENTS

[Patent Document 1] JP 58-160344 A
[Patent Document 2] JP 03-130125 A
[Patent Document 3] JP 58-90033 A
[Patent Document 5] JP 2011-37989 A

[Patent Document 6] JP 2011-132394 A
[Patent Document 7] JP H05 5058 A

## SUMMARY OF INVENTION

## TECHNICAL PROBLEM

The problem to be solved by the present invention is to provide a polyester-based resin composition having excellent gas barrier property and transparency and to provide a molded product using the resin composition.

## SOLUTION TO PROBLEM

As a result of extensive studies, the present inventors have found that a resin composition having an excellent gas barrier property and improved transparency can be provided by blending a polyester resin-based resin component containing a specific polyamide resin with a specific epoxy-functional polymer. The inventors have also found that a molded product produced by drawing the resin composition exhibits excellent transparency. The present invention has been accomplished on the basis of these findings.

Accordingly, the present invention is directed to the following polyester-based resin composition, production method, and molded product using the resin composition.

<1> A polyester-based resin composition comprising:

a resin component which contains 80 to 98 mass% of polyester resin (A) including aromatic dicarboxylic acid units and diol units, and 20 to 2 mass% of polyamide resin (B) including diamine units and dicarboxylic acid units, the diamine units containing 70 mol% or more m-xylylenediamine units and the dicarboxylic acid units containing 70 mol% or more $\alpha,\omega$-aliphatic dicarboxylic acid units; and
0.005 to 0.05 parts by mass of epoxy-functional polymer (C) which contains styrene units represented by formula (c1) and glycidyl (meth)acrylate units represented by formula (c2), with respect to 100 parts by mass of the resin component:

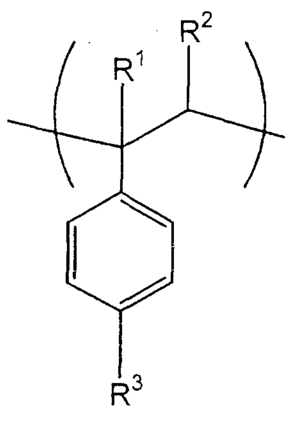
(c1)

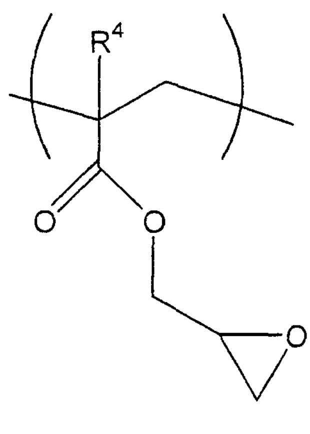
(c2)

where $R^1$ to $R^4$ each independently represent a hydrogen atom or an alkyl group having 1 to 12 carbon atoms.

<2> A method for producing the polyester-based resin composition as recited in <1> above, the method comprising the following steps 1 and 2, wherein:

step 1: melt-kneading 100 parts by mass of polyester resin (A) including aromatic dicarboxylic acid units and diol units, with 10 to 40 parts by mass of epoxy-functional polymer (C), to thereby prepare a master batch (X); and
step 2: melt-kneading 100 parts by mass of a resin component which contains 80 to 98 mass% of polyester resin (A) including aromatic dicarboxylic acid units and diol units, and 20 to 2 mass% of polyamide resin (B) including diamine units containing 70 mol% or more m-xylylenediamine units, and dicarboxylic acid units containing 70 mol% or more α,ω-aliphatic dicarboxylic acid units, with 0.055 to 1.1 parts by mass of the master batch (X) obtained in step 1.

<3> A molded product having at least one layer formed of a polyester-based resin composition as recited in <1> above.

ADVANTAGEOUS EFFECTS OF INVENTION

The polyester-based resin composition of the present invention and the molded product having at least one layer formed of the polyester-based resin composition exhibit excellent gas barrier property and high transparency. Particularly in the case of a stretched product, high transparency can be attained.

DESCRIPTION OF EMBODIMENTS

[Polyester resin (A)]

Polyester resin (A) employed in the present invention includes aromatic dicarboxylic acid units and diol units. The aromatic dicarboxylic acid units preferably include terephthalic acid units in amounts of 70 mol% or more, more preferably 80 mol% or more, further preferably 90 to 100 mol%, from the viewpoints of crystallinity of polyester resin and drying performance before use of polyester resin. From the same viewpoints, the diol units preferably include aliphatic glycol units having 2 to 4 carbon atoms
in amounts of 70 mol% or more, more preferably 80 mol% or more, further preferably 90 to 100 mol%.

Examples of the aromatic dicarboxylic acid other than terephthalic acid or a derivative thereof, which can form the aromatic dicarboxylic acid units of polyester resin (A) and may be used in the present invention, include dicarboxylic acids each having an aromatic nucleus such as benzene, naphthalene, diphenyl, oxydiphenyl, sulfonyldiphenyl, or methylenedipehnyl, and derivatives thereof. Among them, isophthalic acid; naphthalenedicarboxylic acids such as 2,6-naphthalenedicarboxylic acid, 1,5-naphthalenedicarboxylic acid, 2,7-naphthalenedicarboxylic acid; 4,4'-biphenyldicarboxylic acid; 3,4'-biphenyldicarboxylic acid; and derivatives thereof are preferred. Of these, isophthalic acid, 2,6-naphthalenedicarboxylic acid, and a derivative thereof are more preferably used. When isophthalic acid is used as a constituent component, the amount of isophthalic acid with respect to the total amount of the dicarboxylic acid component is 1 to 10 mol%, preferably 1 to 8 mol%, more preferably 1 to 6 mol%. A copolymer resin obtained by adding isophthalic acid as a dicarboxylic acid component in the above amount exhibits low crystallization rate, resulting in enhanced moldability.

In order to improve compatibility with polyamide resin (B), there may be used, as a dicarboxylic acid forming polyester resin (A), a dicarboxylic acid or a derivative thereof having an aromatic nucleus such as benzene, naphthalene, diphenyl, oxydiphenyl, sulfonyldiphenyl, or methylenediphenyl, to which nucleus a metal sulfonate group is bonded. There may be used a dicarboxylic acid compound combined a sulfonate salt metal ion with the aromatic acid nucleus. Examples of the metal of the sulfonate salt metal ion forming the dicarboxylic acid compound include an alkali metal such as lithium, sodium, or potassium; an alkaline earth metal such as magnesium or calcium; and zinc. Examples of the aromatic acid nucleus include sulfophthalic acid, sulfoterephthalic acid, sulfoisophthalic acid, 4-sulfonaphthalene-2,7-dicarboxylic acid, and a derivative thereof. Among them, sulfoisophthalic acid metal salts such as sodium 5-sulfoisophthalate and zinc 5-sulfoisophthalate, and derivatives thereof are preferably used. The ratio of the amounts of these dicarboxylic acids with respect to the amounts of all the dicarboxylic acids is preferably 0.01 to 2 mol%, more preferably 0.03 to 1.5 mol%, further preferably 0.06 to 1.0 mol%. When the conditions are satisfied, compatibility of polyester resin (A) with polyamide resin (B) can be enhanced, without impairing characteristics of polyester resin (A).

So long as the effects of the present invention are not impaired, there may be used aliphatic dicarboxylic acids such as adipic acid, azelaic acid, and sebacic acid; monocarboxylic acids such as benzoic acid, propionic acid, and butyric acid; polyvalent carboxylic acids such as trimellitic acid and pyromellitic acid; and carboxylic anhydrides such as trimellitic anhydride and pyromellitic anhydride.

The aforementioned at least one glycol selected from among aliphatic glycols having 2 to 4 carbon atoms which can form the diol units of polyester resin (A) is preferably ethylene glycol or butylene glycol, with ethylene glycol being particularly preferred. Examples of the diol component which may be used other than aliphatic glycols having 2 to 4 carbon atoms include 1,4-cyclohexanedimethanol, 1,6-hexanediol, and ester-forming derivatives thereof. So long as the effects of the present invention are not impaired, there may be used monohydric alcohols such as butyl alcohol, hexyl alcohol, and octyl alcohol; polyhydric alcohols such as trimethylolpropane, glycerin, and pentaerythritol; and diol components having a cyclic acetal skeleton.

Polyester resin (A) is produced through polymerization of an aromatic dicarboxylic acid and a diol. The production may be performed through a known method such as direct esterification or trans-esterification. Examples of the polycondensation catalyst used in production of polyester include antimony compounds such as antimony trioxide and antimony pentoxide; and germanium compounds such as germanium oxide, which are known in the art. If needed, solid

phase polymerization may be performed through a known technique for elevating molecular weight.

Examples of polyesters preferred in the present invention include polyethylene terephthalate, ethylene terephthalate-isophthalate copolymer, ethylene-1,4-cyclohexanedimethylene-terephthalate copolymer, polyethylene-2,6-naphthalene dicarboxylate copolymer, ethylene-2,6-naphthalene dicarboxylate-terephthalate copolymer, and ethylene-terephthalate-4,4'-biphenyl dicarboxylate copolymer. Among these polyesters, polyethylene terephthalate and ethylene terephthalate-isophthalate copolymer are particularly preferred.

Before use, the water content of polyester resin (A) of the present invention is preferably adjusted to 200 ppm or less, more preferably 100 ppm or less, further preferably 50 ppm or less. No particular limitation is imposed on the intrinsic viscosity (measured in mixture solvent of phenol/1,1,2,2-tetrachloroethane = 60/40 by mass, at 25°C) of polyester resin (A) employed in the present invention, but the viscosity is generally 0.6 to 2.0 dL/g, preferably 0.7 to 1.8 dL/g. When the intrinsic viscosity is 0.6 to 2.0 dL/g, the polyester has sufficiently high molecular weight and moderate melt viscosity which is not excessively high. A polyester-based resin composition obtained from such a polyester can readily provide a molded product and a packaging container, which have mechanical properties required for structural materials.

[Polyamide resin (B)]

Polyamide resin (B) employed in the present invention provides polyester resin (A) with improved gas barrier property.

The diamine units of polyamide resin (B) include m-xylylenediamine units in amounts of 70 mol% or more, preferably 80 mol% or more, more preferably 90 to 100 mol%. When diamine units mainly include m-xylylenediamine, the gas barrier property of the produced polyamide can be effectively enhanced.

No particular limitation is imposed on the diamine which can be used other than m-xylylenediamine, and examples thereof include p-xylylenediamine, 1,3-bis(aminomethyl)cyclohexane, 1,4-bis(aminomethyl)cyclohexane, tetramethylenediamine, hexamethylenediamine, nonamethylenediamine, and 2-methyl-1,5-pantanediamine.

The dicarboxylic acid units of polyamide resin (B) include α,ω-aliphatic dicarboxylic acid in an amount of 70 mol% or more, preferably 75 mol% or more, more preferably 80 to 100 mol%. Through adjusting the α,ω-aliphatic dicarboxylic acid content to 70 mol% or more, a drop in gas barrier property and an excessive drop in crystallinity can be avoided.

Examples of the α,ω-aliphatic dicarboxylic acid include suberic acid, adipic acid, azelaic acid, and sebacic acid. Of these, adipic acid and sebacic acid are preferably used.

No particular limitation is imposed on the dicarboxylic acid unit which can be used other than α,ω-aliphatic dicarboxylic acid, and examples thereof include alicyclic dicarboxylic acids such as 1,3-cyclohexanedicarboxylic acid and 1,4-cyclohexanedicarboxylic acid; and aromatic dicarboxylic acids such as terephthalic acid, isophthalic acid, orthophthalic acid, xylylenedicarboxylic acid, and naphthalenedicarboxylic acid.

So long as the effects of the present invention are not impaired, lactams such as ε-caprolactam and laurolactam; aliphatic aminocarboxylic acids such as aminocaproic acid and aminoundecanoic acid; and aromatic aminocarboxylic acids such as p-aminomethylbenzoic acid may be used as structural co-monomer units forming polyamide resin (B), other than the aforementioned diamine units and dicarboxylic acid units.

Polyamide resin (B) is produced through melt polycondensation (melt polymerization). In one mode of melt polycondensation, a nylon salt formed of a diamine and a dicarboxylic acid is heated in the presence of water under pressurized conditions, and the nylon salt is polymerized in a molten state while added water and condensation water are removed. In an alternative mode of melt polycondensation, a diamine is added directly to a dicarboxylic acid melt, and the mixture is poly-condensed. In the latter case, in order to maintain the reaction system in a homogeneous liquid state, the diamine is continuously added to the dicarboxylic acid during polycondensation, while the reaction system is heated so that the reaction temperature does not lower the melting points of the formed oligoamides and polyamide.

To the polyamide resin (B) polycondensation system, a phosphorus atom-containing compound may be added for promoting amidation and preventing coloring during polycondensation. Examples of the phosphorus atom-containing compound include dimethylphosphinic acid, phenylmethylphosphinic acid, hypophosphorous acid, sodium hypophosphite, potassium hypophosphite, lithium hypophosphite, ethyl hypophosphite, phenylphosphonous acid, sodium phenylphosphonite, potassium phenylphosphonite, lithium phenylphosphonite, ethyl phenylphosphonite, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogenphosphite, sodium phosphite, triethyl phosphite, triphenyl phosphite, and pyrophosphorous acid. Of these, metal hypophosphites such as sodium hypophosphite, potassium hypophosphite, and lithium hypophosphite, are preferably used, since these salts can effectively promote amidation and prevent coloring. Among such salts, sodium hypophosphite is particularly preferred. However, the phosphorus atom-containing compound is not limited to these compounds in the present invention.

The amount of the phosphorus atom-containing compound added to the polyamide resin (B) polycondensation

system is preferably 1 to 500 ppm, as reduced to the phosphorus atom concentration of the polyamide resin (B), more preferably 5 to 450 ppm, further preferably 10 to 400 ppm. Through controlling the amount of the phosphorus atom-containing compound to meet the above conditions, coloring of polyamide during polycondensation and gelation of polyamide can be prevented. Thus, the appearance of the molded products obtained from the produced polyester-based resin can be maintained in a favorable state.

In addition to the phosphorus atom-containing compound, an alkali metal compound is preferably added to the polyamide resin (B) polycondensation system. In order to prevent coloring of polyamide during polycondensation, the phosphorus atom-containing compound must be used in a sufficient amount. However, the phosphorus atom-containing compound may promote gelation of polyamide in some cases. Therefore, an alkali metal compound or an alkaline earth metal compound is preferably caused to be co-present with the phosphorus atom-containing compound so as to control rate of amidation. Examples of the alkali metal compound or the alkaline earth metal compound include alkali metal/alkaline earth metal hydroxides such as lithium hydroxide, sodium hydroxide, potassium hydroxide, rubidium hydroxide, cesium hydroxide, magnesium hydroxide, calcium hydroxide, and barium hydroxide; and alkali metal/alkaline earth metal acetates such as lithium acetate, sodium acetate, potassium acetate, rubidium acetate, cesium acetate, magnesium acetate, calcium acetate, and barium acetate. In the present invention, the alkali metal compound or the alkaline earth metal compound is not limited these specific examples.

In the case where the alkali metal compound is added to the polyamide resin (B) polycondensation system, the ratio by mole of the compound to the phosphorus atom-containing compound is preferably adjusted to 0.5 to 2.0, more preferably 0.6 to 1.8, further preferably 0.7 to 1.5. Through controlling the ratio to meet the above conditions, gel formation can be suppressed, while amidation is promoted by the phosphorus atom-containing compound.

Polyamide resin (B) obtained through melt polycondensation is removed from the reactor, and then pelletized and dried before use. Alternatively, solid-phase polymerization may be carried out in order to elevate the polymerization degree. No particular limitation is imposed on the heating apparatus for carrying out drying and solid-phase polymerization, and any known apparatus may be employed by a known method. Examples of the heating apparatus which may be suitably employed in the invention include a continuous mode heating drier; a rotary drum heating apparatus called a tumble drier, a conical drier, a rotary drier, etc.; and a conical heating apparatus having agitation blades therein, called Nauta mixer. Particularly when solid-phase polymerization of polyamide is carried out, among the aforementioned apparatuses, a rotary drum heating apparatus is preferably employed, since the rotary drum heating apparatus realizes complete closure of the system, to thereby proceed polycondensation in a state where oxygen, a coloring causal substance, is removed.

Polyamide resin (B) produced through the aforementioned steps is less colored and undergoes less gelation. In the present invention, polyamide resin (B) produced through the aforementioned steps preferably has a color difference test b* value of JIS-K-7105 of 5 or less, more preferably 3 or less, further preferably 1 or less. When the polyamide has a b* value of 5 or less, a molded product obtained through processing the polyester-based resin exhibits excellent whiteness, which ensures the value of the product.

Among indices of the polymerization degree of polyamide resin (B), relative viscosity is generally employed. Preferably, polyamide resin (B) has a relative viscosity of 1.5 to 4.2, more preferably 1.6 to 4.0, further preferably 1.7 to 3.8. Through controlling the relative viscosity of polyamide resin (B) to meet the above conditions, consistent moldability can be attained, to thereby produce molded products of favorable appearance.

As used herein, the relative viscosity is a ratio of falling time (t) to falling time ($t_0$), represented by the following formula:

$$\text{relative viscosity} = t/t_0;$$

wherein the falling time (t) is measured by use of a solution of 1 g or polyamide dissolved in 100 mL of 96% sulfuric acid, the time being measured by means of a Cannon-Fenske viscometer at 25°C, and the falling time ($t_0$) is a similar falling time of 96% sulfuric acid itself.

Polyamide resin (B) employed in the present invention preferably has an end amino group concentration of 10 to 40 μeq/g, more preferably 12 to 35 μeq/g, further preferably 15 to 30 μeq/g. Through controlling the end amino group concentration to meet the above conditions, gelation of polyamide resin (B), which would otherwise be caused by repeated heating, is suppressed. Also, yellowing in appearance, which would otherwise be caused by reaction between acetaldehyde generated from polyester resin (A) and end amino groups, is suppressed. No particular limitation is imposed on the means for adjusting the end amino group concentration to fall within the above ranges, and a variety of methods can be employed. For example, polymerization is performed at such a diamine unit to dicarboxylic acid unit ratio by mole that dicarboxylic acid slightly exceeds. Alternatively, end amino groups are blocked by adding a monocarboxylic acid compound, a dicarboxylic anhydride, or the like after completion of reaction.

The polyamide resin (B) preferably has a residual m-xylylenediamine content of 10 ppm or less, more preferably 5 ppm or less, further preferably 1 ppm. Through controlling the residual m-xylylenediamine content to 10 ppm or less, yellowing in appearance, which would otherwise be caused by reaction between acetaldehyde generated from polyester resin (A) and end amino groups, is suppressed. No particular limitation is imposed on the means for adjusting the m-xylylenediamine content to 10 ppm or less, and a variety of methods can be employed. For example, polyamide formed through polymerization is heated under reduced pressure. Alternatively, the polyamide is melted by means of an extruder or a similar apparatus, to thereby reduce the pressure in the system.

Meanwhile, in some cases, polyamide resin (B) contains an oligomer formed of dicarboxylic acid units and diamine units. In particular, a monomer formed though cyclization of m-xylylenediamine and adipic acid (cyclic monomer), in some cases, bleeds to the surface of a molded container during melt processing, to thereby impair the appearance of the container. In the present invention, the cyclic monomer content of polyamide resin (B) is preferably adjusted to 1 mass% or less, more preferably 0.8 mass% or less, further preferably 0.5 mass% or less. Through controlling the cyclic monomer content to meet the above conditions of the present invention, molded products having favorable appearance can be continuously produced over a long period. No particular limitation is imposed on the method for reducing the cyclic monomer content, and any known method for removing low-molecular-weight components and volatile components may be appropriately employed. For example, polyamide resin (B) is washed with water, or treated at high temperature and under high vacuum. Alternatively, such a cyclic monomer is removed under reduced pressure in an extruder during melt-extrusion. In the present invention, the cyclic monomer content may be determined by pulverizing the polyamide under freeze-dry conditions, performing extraction with methanol as a solvent at 80°C for 1 hour, and analyzing the extract through liquid chromatography.

Regarding the components of the polyester-based resin composition of the present invention, the ratio by mass of polyester resin (A) to polyamide resin (B) (polyester resin (A)/polyamide resin (B)), when the total mass of polyester resin (A) and polyamide resin (B) is 100, is 80 to 98/20 to 2, preferably 82 to 97/18 to 3, more preferably 85 to 96/15 to 4, further preferably 87 to 95/13 to 5, from the viewpoint of mechanical strength and gas barrier property.

So long as the effects of the present invention are not impaired, the polyester-based resin composition of the present invention may contain, as a resin component, a resin other than polyester resin (A) and polyamide resin (B). Examples of such an additional resin include polyamides such as nylon 6, nylon 66, and non-crystalline nylon formed from an aromatic dicarboxylic acid as a monomer; modified polyamide resins; polyolefins; modified polyolefin resins; and elastomers having a styrene skeleton.

[Epoxy-functionai polymer (C)]

Epoxy-functional polymer (C) employed in the present invention includes at least styrene units represented by formula (c1) and glycidyl (meth)acrylate units represented by formula (c2), and preferably further (meth)acrylate units represented by formula (c3):

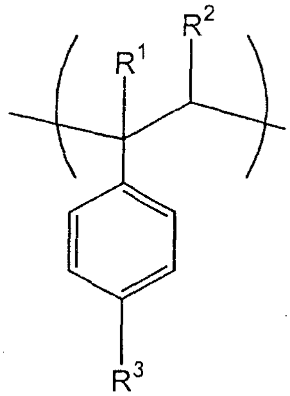
(c1)

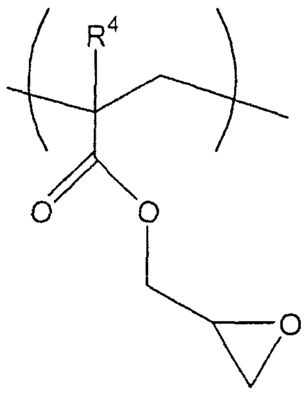
(c2)

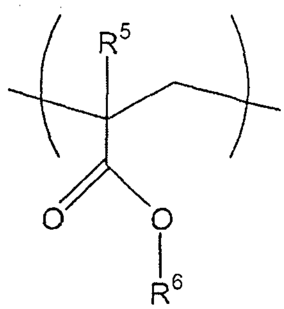
(c3)

where $R^1$ to $R^5$ each independently represent a hydrogen atom or an alkyl group having 1 to 12 carbon atoms , and $R^6$ represents an alkyl group having 1 to 12 carbon atoms.

In the above formulae (c1) to (c3), $R^1$ to $R^5$ each independently represent a hydrogen atom or an alkyl group having 1 to 12 carbon atoms. In the case where each of $R^1$ to $R^5$ is an alkyl group, the alkyl group has 1 to 12 carbon atoms, preferably 1 to 6 carbon atoms, and may be linear-chain, branched, or cyclic. Specific examples of the alkyl

group include methyl, ethyl, and propyl. Of these, methyl is particularly preferred.

$R^6$ represents an alkyl group having 1 to 12 carbon atoms, preferably 1 to 6 carbon atoms, and may be linear-chain, branched, or cyclic. Specific examples of the alkyl group include methyl, ethyl, and propyl. Of these, methyl is particularly preferred.

Particularly when $R^4$ in formula (c2) is a methyl group, and $R^5$ in formula (c3) is a methyl group, a molded product obtained from a polyester-based resin composition containing the epoxy-functional polymer exhibits excellent transparency, which is particularly preferred.

In the epoxy-functional polymer, each of the number x of the styrene units represented by formula (c1) and the number y of the glycidyl (meth)acrylate represented by formula (c2) is 1 to 35, independently. The number y is preferably 2 to 30, more preferably 4 to 25, from the viewpoint of transparency. The sum x + y is preferably 10 to 70, more preferably 15 to 60.

In the case where the epoxy-functional polymer includes (meth)acrylate units represented by formula (c3), each of the number x of the styrene units represented by formula (c1), the number y of the glycidyl (meth)acrylate represented by formula (c2), and the number z of the (meth)acrylate units represented by formula (c3) is 1 to 20, independently. The number y is preferably 2 to 20, more preferably 3 to 10, from the viewpoint of transparency. The sum x + z is preferably more than 10.

These structural units may be linked in any sequence. Thus, the epoxy-functional polymer represented by formula (I) may be a block copolymer or a random copolymer.

The epoxy-functional polymer represented by formula (I) may be a commercial product, for example, "Joncryl ADR" (trade name) manufactured by BASF.

Epoxy-functional polymer (C) is incorporated into the resin component in an amount of 0.005 to 0.05 parts by mass with respect to 100 parts by mass of the resin component, preferably 0.02 to 0.05 parts by mass. When the epoxy-functional polymer (C) content is less than 0.005 parts by mass, transparency cannot be improved, whereas when the polymer (C) content is in excess of 0.1 parts by mass, the melt viscosity of the polyester-based resin composition excessively increases, and gelation may occur. Both cases are not preferred.

In the present invention, a specific amount of epoxy-functional polymer (C) is added to the resin component containing polyester resin (A) and polyamide resin (B), whereby the transparency of the resin product can be enhanced without impairing the gas barrier property of the same. Although the action mechanism has not been completely elucidated, one conceivable mechanism is that end groups of polyester resin (A) and polyamide resin (B) chemically react with epoxy-functional polymer (C), whereby islands of polyamide resin (B) can be micro-dispersed in the sea matrix of polyester resin (A).

[Additives and other components]

So long as the effects of the present invention are not impaired, an additive and other components may be incorporated into the resin composition. Examples of the additive and filler include additives such as an anti-oxidant, a delustering agent, a heat stabilizer, a weather stabilizer, a UV-absorber, a nucleating agent, a plasticizer, a fire retardant, an antistatic agent, an anti-coloring agent, a lubricant, and a gelation inhibitor. A clay such as a sheet silicate, or a nano-filler may also be added.

To the resin composition of the present invention, a cobalt compound may be added for inducing oxidation of polyamide resin (B) to thereby enhance oxygen absorption performance. Among cobalt compounds, cobalt carboxylates; such as cobalt octanoate, cobalt naphthenate, cobalt acetate, and cobalt stearate, are preferably used. In order to effectively providing the resin composition with oxygen absorbing performance, the amount of the cobalt compound added to the composition is preferably 10 to 1,000 ppm, as reduced to metallic cobalt concentration with respect to the total mass of the resin composition, more preferably 30 to 600 ppm, further preferably 50 to 400 ppm.

The aforementioned cobalt compound acts on polyamide resin (B) and also serves as an oxidation catalyst for an organic compound having an unsaturated carbon bond, or a compound having secondary or tertiary hydrogen in the molecule thereof. Thus, in order to further enhance oxygen absorbing performance, the resin composition of the present invention may further contain, in addition to the cobalt compound, a variety of compounds such as an unsaturated hydrocarbon polymer and oligomer such as polybutadiene or polyisoprene; a compound having a xylylenediamine skeleton; and a compound having a functional group that can enhance compatibility of the cobalt compound with polyester.

[Method of producing polyester-based resin composition]

No particular limitation is imposed on the method of producing the polyester-based resin composition. In one method, polyester resin (A), polyamide resin (B), and epoxy-functional polymer (C) are melt-kneaded in an extruder, to thereby yield a resin composition of interest. In an alternative method, polyester resin (A) or polyamide resin (B) is melt-kneaded with epoxy-functional polymer (C), to thereby prepare a master batch, and the master batch is melt-kneaded

with polyester resin (A) and polyamide resin (B). From the viewpoint of dispersibility, the production method preferably includes the following steps 1 and 2.

Step 1: a step of melt-kneading 100 parts by mass of polyester resin (A) including aromatic dicarboxylic acid units and diol units, with 10 to 40 parts by mass of epoxy-functional polymer (C), to thereby prepare a master batch (X).

Step 2: a step of melt-kneading 100 parts by mass of a resin component which contains 80 to 98 mass% of polyester resin (A) including aromatic dicarboxylic acid units and diol units and which contains 20 to 2 mass% of polyamide resin (B) including diamine units containing m-xylylenediamine units in amounts of 70 mol% or more, and dicarboxylic acid units containing $\alpha,\omega$-aliphatic dicarboxylic acid units in amounts of 70 mol% or more, with 0.055 to 1.1 parts by mass of the master batch (X) produced in step 1.

[Molded product]

The polyester-based resin composition of the present invention may find a variety of uses for which gas barrier property is required, such as packaging materials and industrial materials. The resin composition may be molded into a film, a sheet, a hollow container having a small thickness, etc.

The molded product of the present invention has at least one layer formed of the polyester-based resin composition. The molded product of the present invention may have a single layer of the polyester-based resin composition, or a laminate structure including at least one layer formed of the polyester-based resin composition and, on a surface thereof, another thermoplastic resin layer (e.g., a polyester resin layer or an adhesive resin layer). The laminate structure may be composed of two or more layers formed of the polyester-based resin composition.

No particular limitation is imposed on the method for producing the molded product of the present invention, and any method may be employed. For example, a film or sheet product of the resin composition may be produced by extruding the melt of the composition by means of an extruder through a T die, a circular die, or the like. The thus-produced film may be stretched to provide an oriented film. A bottle-shaped packaging container may be produced by injecting the melt of the resin composition from an injection molding machine to a die, to thereby provide a preform, and blow-stretching the preform at an orientation temperature.

Containers such as a tray and a cup may be produced by injecting the melt of the resin composition from an injection molding machine to a die, or through a molding technique such as vacuum forming or air pressure forming. The method for producing a molded product from the resin composition of the present invention is not limited to the aforementioned techniques, and various other methods may be applied.

In the case where the molded product of the present invention is a film or a sheet, the haze of the product is preferably 5% or less, more preferably 4% or less. In the case where the molded product of the present invention is a bottle, the haze is preferably 9.5% or less, more preferably 9.0% or less, further preferably 8.5% or less. The method of measuring the haze is described in the below-described Examples.

Packaging containers formed from the polyester-based resin composition of the present invention can be applied to keeping or storage of various articles. Examples of such articles include beverages, seasonings, food grains, liquid and solid processed foods requiring aseptic packaging or heat sterilization, chemicals, liquid commodities, pharmaceuticals, semiconductor integrated circuits, and electronic devices.

EXAMPLES

The present invention will next be described in more detail by way of examples, which should not be construed as limiting the invention thereto. Materials, analysis and measurement methods, and molded product production methods employed in the Examples and Comparative Examples are described below.

1. Materials

The following materials were employed in Examples and Comparative Examples.

(1) Polyester resin (A)

The following PET resins were employed. Specifically, there were employed pellets which had been dried by means of a dehumidification drier at 150°C for six hours.

PET1 (trade name: "RT-543C" manufactured by Nippon Unipet Co., Ltd., intrinsic viscosity: 0.75 dL/g, homo-PET)
PET2 (trade name: "BK-2180" manufactured by Nippon Unipet Co., Ltd., intrinsic viscosity: 0.83 dL/g, 1.5 mol% isophthalic acid-copolymerized PET)

(2) Polyamide resin (B)

There were employed pellets of poly-m-xylylene adipamide (trade name: "MX Nylon S6007" manufactured by Mitsubishi Gas Chemical Company, Inc., number average molecular weight Mn: 23,000).

(3) Epoxy-functional polymer (C), master batch (X)

There was employed an epoxy-functional polymer (trade name: "Joncryl ADR-4368" manufactured by BASF, weight average molecular weight: 6,800, epoxy value: 285 g/mol). The polymer employed in Examples includes at least units represented by formulas (c1) and (c2), wherein each of $R^1$ to $R^3$ is a hydrogen atom, $R^4$ is a methyl group, x is 31 to 34, and y is 22 to 25. Specifically, there was employed a resin composition (master batch (X)) prepared through melt-kneading of 100 parts by mass of PET resin (A) with 30 parts by mass of epoxy-functional polymer (C). The resin composition was dried by means of a vacuum drier at 140°C for five hours before use.

2. Analysis and measurement methods

The properties of materials employed in Examples and Comparative Examples, and the properties of polyester containers were analyzed and measured through the below-described methods.

(1) End group concentration of polyamide resin

(a) End amino group concentration ($[NH_2]$ mmol/kg)

A polyamide resin was precisely weighed in an amount of 0.5 g, and dissolved with stirring in 30 mL of a mixture containing phenol and ethanol in proportions by volume of 4:1. After complete dissolution of the polyamide resin, neutralization titration was carried out with N/100 hydrochloric acid, to thereby determine the end amino group concentration of the polyamide resin.

(b) End carboxyl group concentration ([COOH] mmol/kg)

A polyamide resin was precisely weighed in an amount of 0.5 g, and dissolved with stirring in 30 mL of benzyl alcohol under a stream of nitrogen at 160 to 180°C. After complete dissolution of the polyamide resin, the solution was cooled to 80°C under a stream of nitrogen, methanol was added in an amount of 10 mL to the solution with stirring, and neutralization titration was carried out with N/100 aqueous sodium hydroxide solution, to thereby determine the end carboxyl group concentration of the polyamide resin.

(2) Number average molecular weight of polyamide resin

The number average molecular weight (Mn) of a polyamide resin was calculated by use of the following formula on the basis of the amino group concentration ($[NH_2]$ mmol/kg) and carboxyl group concentration ([COOH] mmol/kg) of the polyamide resin.

$$Mn = 2 \times 10^6/([NH_2] + [COOH])$$

(3) Melting point of polyester resin and polyamide resin

Measurement was carried out by means of a differential scanning calorimeter (trade name: "DSC-60" manufactured by Shimadzu Corporation) under a stream of nitrogen at a temperature elevation rate of 10°C/min. The thus-measured melting peak temperature was regarded as a melting point.

(4) Haze

The haze of a non-oriented sheet or a biaxially oriented film was measured according to JIS K7105. Specifically, a piece having a size of 5 cm × 5 cm was cut out of the sheet or the film, and the haze of the piece was measured by means of a colorimeter/turbidity meter (trade name: "COH-400" manufactured by Nippon Denshoku Industries Co., Ltd.).

The haze of a polyester-based container was measured according to JIS K7105. Specifically, a piece having

a size of 5 cm × 5 cm was cut out of the body of the bottle, and the haze of the piece was measured in the same manner as described above.

(5) Measurement of oxygen permeability of polyester-based container

The oxygen permeability of a non-oriented sheet having a thickness of 0.3 mm or a biaxially oriented film having a thickness of 35 μm was measured by means of an oxygen permeability measuring apparatus (trade name: "OX-TRAN 2/21SH" manufactured by MOCON) at 23°C and 60% RH. Lower oxygen permeability is preferred from the viewpoint of reducing the amount of oxygen permeated.
The oxygen permeability of a single-layer bottle was measured by means of an oxygen permeability measuring apparatus (trade name: "OX-TRAN 2/21" manufactured by MOCON) under the following conditions: humidity inside the container: 100% RH, humidity outside the container: 50% RH, temperature: 23°C. Lower oxygen permeability is preferred from the viewpoint of reducing the amount of oxygen permeated.

Example 1

Dry pellets of PET1 of polyester resin (A) and pellets of polyamide resin (B) were added to a tumbler so that the ratio by mass of the polyester resin to the polyamide resin was 95/5. Master batch (X) which had been prepared in advance was added in an amount of 0.1 parts by mass (0.0231 parts by mass as reduced to epoxy-functional polymer (C)) to 100 parts by mass of the entire pellets, followed by mixing for 10 minutes.
Subsequently, film formation was carried out by means of a twin-screw extruder (manufactured by Research Laboratory of Plastics Technology Co., Ltd., screw diameter: 30 mmϕ, L/D = 27) through the T-die method under the following conditions: cylinder temperature: 250 to 275°C, T die temperature: 270°C, screw rotation speed: 100 rpm, cooling roller temperature: 75°C, to thereby produce a non-oriented sheet (width: 25 mm, thickness: about 0.3 mm).
Then, the non-oriented sheet was preheated by means of a biaxial stretching machine (manufactured by Toyo Seiki Seisaku-Sho, Ltd.) at 100°C for one minute, and the thus-heated sheet was oriented in longitudinal and lateral directions simultaneously under the following conditions: linear orientation speed: 3,000 mm/minute, orientation magnification in longitudinal direction: 3.0, orientation magnification in lateral direction: 3.0, to thereby produce a biaxially oriented film having a thickness of about 35 μm.

Example 2

The procedure of Example 1 was repeated, except that the amount of master batch (X) added was changed to 0.2 parts by mass (0.0462 parts by mass as reduced to epoxy-functional polymer (C)), to thereby produce a non-oriented sheet and a biaxially oriented film.

Comparative Example 1

The procedure of Example 1 was repeated, except that master batch (X) was not added, to thereby produce a non-oriented sheet and a biaxially oriented film.
Table 1 shows the hazes and oxygen permeabilities of the non-oriented sheets and biaxially oriented films produced in the Examples and the Comparative Example.

Table 1

| | | | | Example 1 | Example 2 | Comparative Example 1 |
|---|---|---|---|---|---|---|
| Composition of raw materials | Resin component | Polyester resin (A) | No. | PET1 | PET1 | PET1 |
| | | | Mass% | 95 | 95 | 95 |
| | | Polyamide resin (B) | Mass% | 5 | 5 | 5 |
| | Master batch (X) | Polyester resin (A) | No. | PET1 | PET1 | - |
| | | | Parts by mass | 100 | 100 | - |
| | | Epoxy-functional polymer (C) | Parts by mass | 30 | 30 | - |
| | Amount of master batch (X) added to 100 parts by mass of resin component | | Parts by mass | 0.1 | 0.2 | 0 |
| Polyester resin composition | Epoxy-functional polymer (C) concentration | | Parts by mass | 0.0231 | 0.0462 | 0 |
| Haze | Non-oriented sheet (thickness: 0.3 mm) | | % | 3.9 | 3.8 | 8.3 |
| | Biaxially oriented film (thickness: 35 μm) | | % | 3.2 | 3.7 | 10.1 |
| Oxygen permeability | Non-oriented sheet (thickness: 0.3 mm) | | cc/0.3 mm·$m^2$·day·atm | 6.6 | 6.8 | 6.7 |
| | Biaxially oriented film (thickness: 35 μm) | | cc/35 μm·$m^2$·day·atm | 28 | 26 | 29 |

The non-oriented sheet and biaxially oriented film of Example 1 or 2, which were produced through addition of a specific amount of epoxy-functional polymer (C), maintained gas barrier property and exhibited considerably improved transparency, as compared with the non-oriented sheet and biaxially oriented film of Comparative Example 1, which were produced without addition of epoxy-functional polymer (C). Particularly, the biaxially oriented film of Example 1 or 2 was found to exhibit excellent transparency; i.e., no increase in haze.

Example 3

Dry pellets of PET1 of polyester resin (A) and pellets of polyamide resin (B) were added to a tumbler so that the ratio by mass of the polyester resin to the polyamide resin was 95/5. Master batch (X) was added in an amount of 0.1 parts by mass (0.0231 parts by mass as reduced to epoxy-functional polymer (C)) to 100 parts by mass of the entire pellets, followed by mixing for 10 minutes.

Then, the above-mixed pellets were subjected to injection molding by means of an injection molding machine (model: "M200" manufactured by Meiki Co., Ltd., four-shot molding type) under the below-described conditions, to thereby produce a single-layer preform (entire length: 95 mm, outer diameter: 22 mm, thickness: 3.0 mm).

<Single-layer preform molding conditions>

Injection cylinder temperature: 260°C
Temperature of resin passage of mold: 260°C
Mold cooling water temperature: 22°C

Subsequently, the thus-produced single-layer preform was cooled, and then subjected to biaxial orientation blow molding by means of a blow molding machine (model: "EFB1000ET" manufactured by Frontier Inc.) under the

below-described conditions, to thereby produce a single-layer bottle (height: 223 mm, body diameter: 65 mm, volume: 500 mL, thickness: 0.3 mm).

(Biaxial orientation blow molding conditions)

Preform heating temperature: 103°C
Pressure for orientation rod: 0.5 MPa
Primary blow pressure: 0.5 MPa
Secondary blow pressure: 2.5 MPa
Primary blow delay time: 0.32 sec
Primary blow time: 0.28 sec
Secondary blow time: 2.0 sec
Blow exhaust time: 0.6 sec
Mold temperature: 30°C

Example 4

The procedure of Example 3 was repeated, except that the amount of master batch (X) added was changed to 0.2 parts by mass (0.0462 parts by mass as reduced to epoxy-functional polymer (C)), to thereby produce a single-layer bottle.

Comparative Example 2

The procedure of Example 3 was repeated, except that master batch (X) was not added, to thereby produce a single-layer bottle.

Comparative Example 3

The procedure of Example 3 was repeated, except that the amount of master batch (X) added was changed to 0.005 parts by mass (0.0012 parts by mass as reduced to epoxy-functional polymer (C)), to thereby produce a single-layer bottle.

Table 2 shows the hazes and oxygen permeabilities of the single-layer bottles produced in the Examples and the Comparative Examples.

Table 2

| | | | | Example 3 | Example 4 | Comparative Example 2 | Comparative Example 3 |
|---|---|---|---|---|---|---|---|
| Composition of raw materials | Resin component | Polyester resin (A) | No. | PET1 | PET1 | PET1 | PET1 |
| | | | Mass% | 95 | 95 | 95 | 95 |
| | | Polyamide resin (B) | Mass% | 5 | 5 | 5 | 5 |
| | Master batch (X) | Polyester resin (A) | No. | PET1 | PET1 | - | PET1 |
| | | | Parts by mass | 100 | 100 | - | 100 |
| | | Epoxy-functional polymer (C) | Parts by mass | 30 | 30 | - | 30 |
| | Amount of master batch (X) added to 100 parts by mass of resin component | | Parts by mass | 0.1 | 0.2 | 0 | 0.005 |
| Polyester resin composition | Epoxy-functional polymer (C) concentration | | Parts by mass | 0.0231 | 0.0462 | 0 | 0.0012 |
| Haze | Single-layer bottle (thickness: 0.3 mm) | | % | 9.1 | 7.7 | 10.1 | 10.0 |
| Oxygen permeability | Single-layer bottle (thickness: 0.3 mm) | | cc/bottle·day·0.21atm | 0.029 | 0.028 | 0.030 | 0.029 |

The single-layer bottle of Example 3 or 4, which was produced through addition of a specific amount of epoxy-functional polymer (C), maintained gas barrier property and exhibited considerably improved transparency, as compared with the single-layer bottle of Comparative Example 2, which was produced without addition of epoxy-functional polymer (C). Meanwhile, the single-layer bottle of Comparative Example 3, which was produced through addition of a small amount of epoxy-functional polymer (C), failed to improve in transparency, unlike the case of the single-layer bottle of Example 3 or 4.

Example 5

The procedure of Example 3 was repeated, except that PET2 was employed as polyester resin (A), to thereby produce a single-layer bottle.

Example 6

The procedure of Example 4 was repeated, except that PET2 was employed as polyester resin (A), to thereby produce a single-layer bottle.

Comparative Example 4

The procedure of Comparative Example 2 was repeated, except that PET2 was employed as polyester resin (A), to thereby produce a single-layer bottle.

Table 3 shows the hazes and oxygen permeabilities of the single-layer bottles produced in the Examples and the Comparative Example.

Table 3

| | | | | Example 5 | Example 6 | Comparative Example 4 |
|---|---|---|---|---|---|---|
| Composition of raw materials | Resin component | Polyester resin (A) | No. | PET2 | PET2 | PET2 |
| | | | Mass% | 95 | 95 | 95 |
| | | Polyamide resin (B) | Mass% | 5 | 5 | 5 |
| | Master batch (X) | Polyester resin (A) | No. | PET2 | PET2 | - |
| | | | Parts by mass | 100 | 100 | - |
| | | Epoxy-functional polymer (C) | Parts by mass | 30 | 30 | - |
| | Amount of master batch (X) added to 100 parts by mass of resin component | | Parts by mass | 0.1 | 0.2 | 0 |
| Polyesterresin composition | Epoxy-functional polymer (C) concentration | | Parts by mass | 0.0231 | 0.0462 | 0 |
| Haze | Single-layer bottle (thickness: 0.3 mm) | | % | 8.5 | 8.2 | 9.3 |
| Oxygen permeability | Single-layer bottle (thickness: 0.3 mm) | | cc/ bottle·day· 0.21atm | 0.031 | 0.031 | 0.032 |

The single-layer bottle of Example 5 or 6, which was produced through addition of a specific amount of epoxy-functional polymer (C), maintained gas barrier property and exhibited considerably improved transparency, as compared with the single-layer bottle of Comparative Example 4, which was produced without addition of epoxy-functional polymer (C).

INDUSTRIAL APPLICABILITY

The polyester-based resin composition and molded product of the present invention exhibit excellent gas barrier property and high transparency, and are useful for any of a sheet, a film, a packaging container, various molded articles, composite materials (e.g., laminate films and laminate containers), and the like.

## Claims

1. A polyester-based resin composition comprising:

   a resin component which contains 80 to 98 mass% of polyester resin (A) including aromatic dicarboxylic acid units and diol units, and 20 to 2 mass% of polyamide resin (B) including diamine units and dicarboxylic acid units, the diamine units containing 70 mol% or more m-xylylenediamine units and the dicarboxylic acid units containing 70 mol% or more $\alpha,\omega$-aliphatic dicarboxylic acid units; and
   0.005 to 0.05 parts by mass of epoxy-functional polymer (C) which contains styrene units represented by formula (c1) and glycidyl (meth)acrylate units represented by formula (c2), with respect to 100 parts by mass of the resin component:

   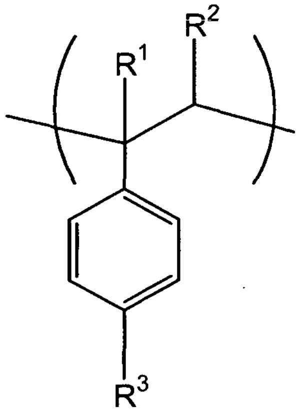

   (c1)

   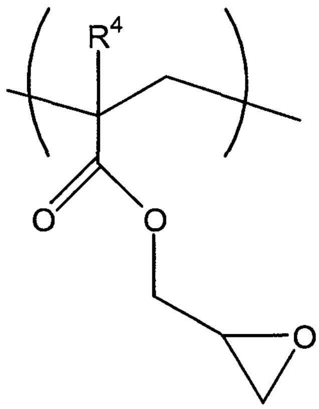

   (c2)

   where $R^1$ to $R^4$ each independently represent a hydrogen atom or an alkyl group having 1 to 12 carbon atoms.

2. The polyester-based resin composition according to claim 1, wherein the epoxy-functional polymer (C) includes styrene units represented by formula (c1), glycidyl (meth)acrylate units represented by formula (c2), and (meth)acrylate units represented by formula (c3):

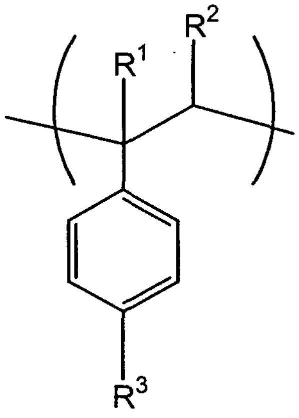

(c1)

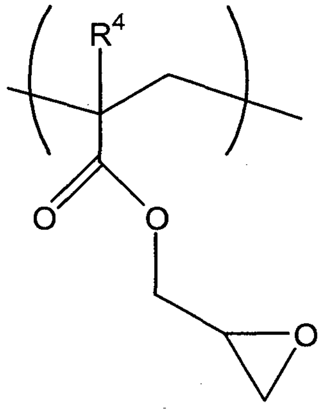

(c2)

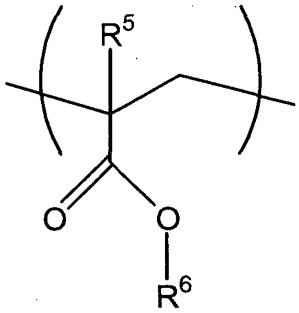

(c3)

where $R^1$ to $R^5$ each independently represent a hydrogen atom or an alkyl group having 1 to 12 carbon atoms, and $R^6$ represents an alkyl group having 1 to 12 carbon atoms.

**3.** The polyester-based resin composition according to claim 1 or 2, wherein the polyester resin (A) includes aromatic dicarboxylic acid units containing 70 mol% or more terephthalic acid units, and diol units containing 70 mol% or more aliphatic glycol units having 2 to 4 carbon atoms.

**4.** The polyester-based resin composition according to any of claims 1 to 3, wherein the polyester resin (A) includes 0.01 to 2 mol% of metal sulfoisophthalate units in the aromatic dicarboxylic acid units.

**5.** The polyester-based resin composition according to any of claims 1 to 4, wherein $R^4$ in formula (c2) is a hydrogen atom or a methyl group.

**6.** The polyester-based resin composition according to any of claims 2 to 5, wherein $R^5$ in formula (c3) is a hydrogen atom or a methyl group.

**7.** The polyester-based resin composition according to any of claims 2 to 6, wherein $R^6$ in formula (c3) is a methyl group.

**8.** A method for producing a polyester-based resin composition as recited in any of claims 1 to 7, the method comprising the following steps 1 and 2, wherein:

step 1: melt-kneading 100 parts by mass of polyester resin (A) including aromatic dicarboxylic acid units and diol units, with 10 to 40 parts by mass of epoxy-functional polymer (C), to thereby prepare a master batch (X); and
step 2: melt-kneading 100 parts by mass of a resin component which contains 80 to 98 mass% of polyester resin (A) including aromatic dicarboxylic acid units and diol units, and 20 to 2 mass% of polyamide resin (B) including diamine units containing 70 mol% or more m-xylylenediamine units, and dicarboxylic acid units containing 70 mol% or more $\alpha,\omega$-aliphatic dicarboxylic acid units, with 0.055 to 1.1 parts by mass of the master batch (X) obtained in step 1.

**9.** A molded product having at least one layer formed of a polyester-based resin composition as recited in any of claims 1 to 7.

**10.** The molded product according to claim 9, which is a film, a sheet, or a container.

**Patentansprüche**

**1.** Eine Harzzusammensetzung auf Polyesterbasis, umfassend:

eine Harzkomponente, enthaltend 80 bis 98 Massen-% eines Polyesterharzes (A), das aromatische Dicarbonsäureeinheiten und Dioleinheiten enthält, und 20 bis 2 Massen-% eines Polyamidharzes (B), das Diamineinheiten und Dicarbonsäureeinheiten enthält, wobei die Diamineinheiten 70 Mol% oder mehr an m-Xylylendiamineinheiten enthalten und die Dicarbonsäureeinheiten 70 Mol% oder mehr an α,ω-aliphatischen Dicarbonsäureeinheiten enthalten; und
0,005 bis 0,05 Masseteile eines epoxyfunktionellen Polymers (C), das Styroleinheiten, dargestellt durch Formel (c1), und Glycidyl(meth)acrylat-Einheiten, dargestellt durch Formel (c2), enthält, bezogen auf 100 Massenteile der Harzkomponente:

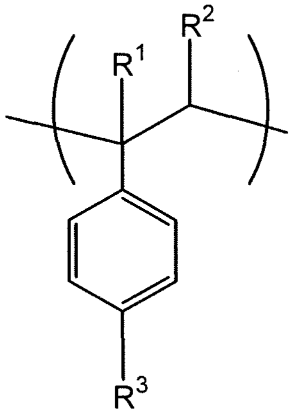
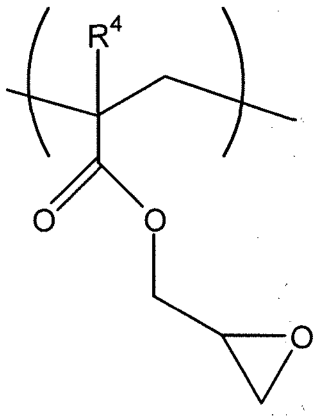

(c1) (c2)

worin $R^1$ bis $R^4$ jeweils unabhängig voneinander ein Wasserstoffatom oder eine Alkylgruppe mit 1 bis 12 Kohlenstoffatomen darstellen.

**2.** Die Harzzusammensetzung auf Polyesterbasis nach Anspruch 1, wobei das epoxyfunktionelle Polymer (C) Styroleinheiten, dargestellt durch Formel (c1), Glycidyl(meth)acrylat-Einheiten, dargestellt durch Formel (c2) und (Meth)acrylat-Einheiten, dargestellt durch Formel (c3), enthält:

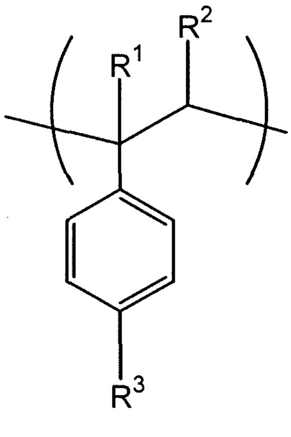
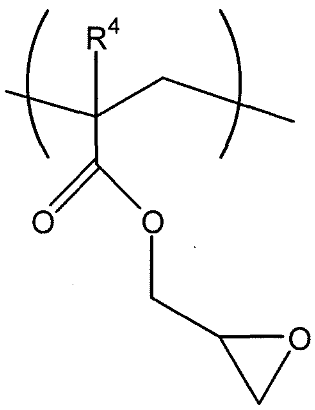
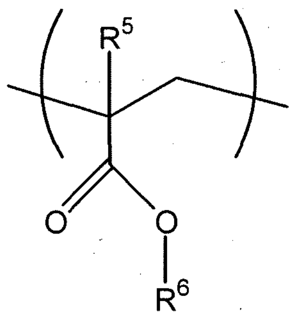

(c1) (c2) (c3)

worin $R^1$ bis $R^5$ jeweils unabhängig voneinander ein Wasserstoffatom oder eine Alkylgruppe mit 1 bis 12 Kohlenstoffatomen darstellen und $R^6$ eine Alkylgruppe mit 1 bis 12 Kohlenstoffatomen darstellt.

**3.** Die Harzzusammensetzung auf Polyesterbasis nach Anspruch 1 oder 2, wobei das Polyesterharz (A) aromatische Dicarbonsäureeinheiten, die 70 Mol% oder mehr an Terephthalsäureeinheiten enthalten, und Dioleinheiten, die 70 Mol% oder mehr an aliphatischen Glycoleinheiten mit 2 bis 4 Kohlenstoffatomen enthalten, enthält.

4. Die Harzzusammensetzung auf Polyesterbasis nach einem der Ansprüche 1 bis 3, wobei das Polyesterharz (A) 0,01 bis 2 Mol% an Metallsulfoisophthalat-Einheiten in den aromatischen Dicarbonsäureeinheiten enthält.

5. Die Harzzusammensetzung auf Polyesterbasis nach einem der Ansprüche 1 bis 4, wobei $R^4$ in Formel (c2) ein Wasserstoffatom oder eine Methylgruppe ist.

6. Die Harzzusammensetzung auf Polyesterbasis nach einem der Ansprüche 2 bis 5, wobei $R^5$ in Formel (c3) ein Wasserstoffatom oder eine Methylgruppe ist.

7. Die Harzzusammensetzung auf Polyesterbasis nach einem der Ansprüche 2 bis 6, wobei $R^6$ in Formel (c3) eine Methylgruppe ist.

8. Ein Verfahren zur Herstellung einer Harzzusammensetzung auf Polyesterbasis wie in einem der Ansprüche 1 bis 7 dargelegt, wobei das Verfahren die nachstehenden Schritte 1 und 2 umfasst, wobei:

Schritt 1: Schmelzkneten von 100 Massenteilen eines Polyesterharzes (A), enthaltend aromatische Dicarbonsäureeinheiten und Dioleinheiten, mit 10 bis 40 Massenteilen eines epoxyfunktionellen Polymers (C), um dadurch ein Masterbatch (X) herzustellen; und
Schritt 2: Schmelzkneten von 100 Massenteilen einer Harzkomponente, enthaltend 80 bis 98 Massen-% eines Polyesterharzes (A), das aromatische Dicarbonsäureeinheiten und Dioleinheiten enthält, und 20 bis 2 Massen-% eines Polyamidharzes (B), das Diamineinheiten, welche 70 Mol% oder mehr an m-Xylylendiamineinheiten enthalten, und Dicarbonsäureeinheiten, die 70 Mol% oder mehr an $\alpha,\omega$-aliphatischen Dicarbonsäureeinheiten enthalten, enthält, mit 0,055 bis 1,1 Massenteilen des in Schritt 1 erhaltenen Masterbatches (X).

9. Ein Formkörper mit mindestens einer Schicht aus einer Harzzusammensetzung auf Polyesterbasis, wie in einem der Ansprüche 1 bis 7 dargelegt.

10. Der Formkörper nach Anspruch 9, der eine Folie, ein Blech oder ein Behälter ist.

## Revendications

1. Composition de résine à base de polyester comprenant :

un composant résine qui contient de 80 à 98 % en poids de résine polyester (A) contenant des motifs acide dicarboxylique aromatiques et des motifs diol, et de 20 à 2 % en poids de résine polyamide (B) contenant des motifs diamine et des motifs acide dicarboxylique, les motifs diamine contenant 70 % en mol ou plus de motifs m-xylylène diamine et les motifs acide dicarboxylique contenant 70 % en mol ou plus de motifs acide dicarboxylique $\alpha,\omega$-aliphatiques ; et
de 0,005 à 0,05 partie en poids d'un polymère à fonction époxy (C) qui contient des motifs styrène représentés par la formule (c1) et des motifs (méth)acrylate de glycidyle représentés par la formule (c2), pour 100 parties en poids du composant résine :

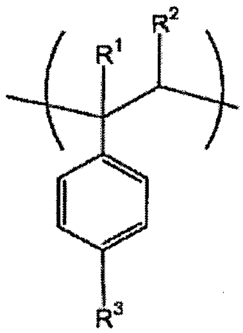
(c1)

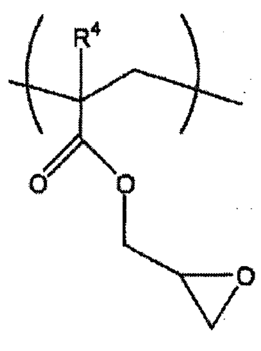
(c2)

où $R^1$ à $R^4$ représentent chacun indépendamment un atome d'hydrogène ou un groupe alkyle ayant de 1 à 12

atomes de carbone.

**2.** Composition de résine à base de polyester selon la revendication 1, dans laquelle le polymère à fonction époxy (C) contient des motifs styrène représentés par la formule (c1), des motifs (méth)acrylate de glycidyle représentés par la formule (c2), et des motifs (méth)acrylate représentés par la formule (c3) :

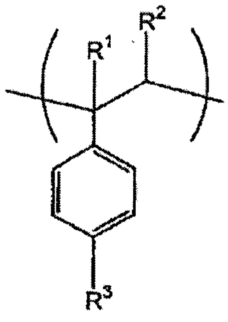
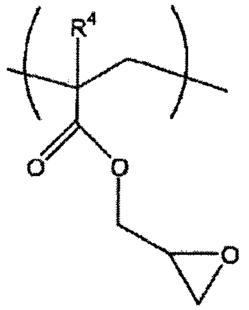
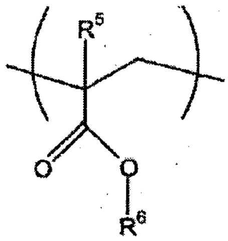

(c1) (c2) (c3)

où $R^1$ à $R^5$ représentent chacun indépendamment un atome d'hydrogène ou un groupe alkyle ayant de 1 à 12 atomes de carbone, et $R^6$ représente un groupe alkyle ayant de 1 à 12 atomes de carbone.

**3.** Composition de résine à base de polyester selon la revendication 1 ou 2, dans laquelle la résine polyester (A) contient des motifs acide dicarboxylique aromatiques contenant 70 % en mol ou plus de motifs acide téréphtalique, et des motifs diol contenant 70 % en mol ou plus de motifs glycol aliphatiques ayant de 2 à 4 atomes de carbone.

**4.** Composition de résine à base de polyester selon l'une quelconque des revendications 1 à 3, dans laquelle la résine polyester (A) contient de 0,01 à 2 % en mol de motifs sulfoisophtalate métalliques dans les motifs acide dicarboxylique aromatiques.

**5.** Composition de résine à base de polyester selon l'une quelconque des revendications 1 à 4, dans laquelle $R^4$ dans la formule (c2) est un atome d'hydrogène ou un groupe méthyle.

**6.** Composition de résine à base de polyester selon l'une quelconque des revendications 2 à 5, dans laquelle $R^5$ dans la formule (c3) est un atome d'hydrogène ou un groupe méthyle.

**7.** Composition de résine à base de polyester selon l'une quelconque des revendications 2 à 6, dans laquelle $R^6$ dans la formule (c3) est un groupe méthyle.

**8.** Méthode de production d'une composition de résine à base de polyester selon l'une quelconque des revendications 1 à 7, la méthode comprenant les étapes 1 et 2 suivantes :

étape 1 : malaxage à chaud de 100 parties en poids d'une résine polyester (A) contenant des motifs acide dicarboxylique aromatiques et des motifs diol, avec de 10 à 40 parties en poids de polymère à fonction époxy (C), pour obtenir ainsi un mélange- maître (X) ; et

étape 2 : malaxage à chaud de 100 parties en poids d'un composant résine qui contient de 80 à 98 % en poids d'une résine polyester (A) contenant des motifs acide dicarboxylique aromatiques et des motifs diol, et de 20 à 2 % en poids d'une résine polyamide (B) contenant des motifs diamine contenant 70 % en mol ou plus de motifs m-xylylène diamine, et des motifs acide dicarboxylique contenant 70 % en mol ou plus de motifs acide dicarboxylique $\alpha,\omega$-aliphatiques, avec de 0,055 à 1,1 partie en poids du mélange-maître (X) obtenu à l'étape 1.

**9.** Produit moulé comportant au moins une couche formée à partir d'une composition de résine à base de polyester selon l'une quelconque des revendications 1 à 7.

**10.** Produit moulé selon la revendication 9, qui est un film, une feuille, ou un récipient.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58160344 A
- JP 3130125 A
- JP 58090033 A
- JP 2011037989 A
- JP 2011132394 A
- JP H055058 A